# FASCICULE DE BREVET EUROPEEN

(11) **EP 0 508 851 B1**
(45) Date de publication et mention de la délivrance du brevet: **31.05.1995**
(21) Numéro de dépôt: 92400811.3
(22) Date de dépôt: 25.03.1992
(51) Int. Cl.: F02K 9/97, F02K 9/38

(54) **Amortisseur d'onde de choc pour un système de propulsion à réaction**
Schockdämpfer für ein Strahlantriebssystem
Shock absorber for a jet propulsion system

(30) Priorité: 10.04.1991 FR 9104365
(43) Date de publication de la demande: 14.10.1992
(73) Titulaire: AEROSPATIALE Société Nationale Industrielle, 75781 Paris Cédex 16 (FR)
(72) Inventeur: Garnero, Pascal, F-78870 Bailly (FR); Siegwald, Roland, F-92160 Antony (FR)
(74) Mandataire: Rinuy, Santarelli

(56) Documents cités:
- GB-A- 1 468 814
- GB-A- 2 014 664
- US-A- 3 115 010
- US-A- 4 033 121

## Description

L'invention concerne l'amortissement des ondes de choc instationnaires apparaissant dans des systèmes à débit de fluide compressible sous pression, à mise en débit brutale, comportant un orifice ou tuyère de décharge en aval duquel (de laquelle) des équipements ou des éléments de structure sont à protéger, en particulier dans le cas ou cet orifice ou tuyère peut être muni d'un élément éjectable.

Elle s'applique à tout système de propulsion en particulier pour vecteur aéronautique ou marin.

On connaît déjà des systèmes de propulsion comprenant une chambre de combustion débitant ses gaz dans une tuyère, au moyen éventuellement d'un tube intermédiaire. Autour de la tranche d'échappement de la tuyère sont disposés des organes mécaniques et électriques de formes et fonctions diverses liés à la liaison avec l'étage précédent ou le poste de lancement, aux transmissions, et à la détection, au pilotage, etc...

Au moment de l'allumage du propulseur, il est connu que la brusque mise en régime des gaz peut prendre la forme d'une onde de choc de débit. Au franchissement de la sortie de la tuyère, ce choc se réfracte à partir de la tranche d'échappement vers le pourtour et va se réfléchir sur les organes mentionnés ci-dessus, en provoquant sur les organes les plus proches une percussion mécanique dont les effets peuvent aller de mouvements parasites, à des endommagements inacceptables pour le fonctionnement.

On connaît déjà de par le document US-A-4.203.347 (PINSON et al.), un dispositif amortisseur de choc visant à atténuer les conséquences (notamment sonores) des ondes de choc apparaissant au lancement d'une roquette, mais celui-ci est destiné à se fixer à l'arrière du tube-lanceur et ne saurait donc contribuer à atténuer l'incidence de ces ondes de choc sur le bloc de propulsion et de stabilisation de la roquette. Ce dispositif est en pratique formé d'une pluralité de surfaces annulaires coaxiales au tube lanceur et décalées axialement.

On connaît également de par le document GB-A-2.104.664 un dispositif atténuateur d'onde de choc destiné à réduire l'intensité du phénomène de choc généré par la rupture d'un diaphragme frangible formant l'orifice d'une chambre. Mais cet atténuateur est disposé à proximité immédiate du diaphragme, dans la chambre à haute pression, pour amortir les ondes en retour. Il comporte une plaque de réflexion de section sensiblement égale à celle de l'orifice et doit être soumis sur ses deux faces à la pression de la chambre. Il ne saurait en conséquence être monté en aval d'un tel diaphragme.

L'invention vise donc un aménagement de la structure même d'un dispositif de propulsion par jet de vecteur aéronautique ou marin adapté à réduire l'effet destructeur sur lui-même d'une onde de choc instationnaire apparaissant à la mise à feu.

Plus généralement, elle vise à réduire l'effet destructeur d'une onde de choc instationnaire sur les équipements disposés en aval d'un orifice ou tuyère de décharge d'un système à débit de fluide de préférence compressible à mise sous pression brutale.

Elle propose à cet effet un système à débit de fluide compressible à mise sous pression brutale comportant un canal d'évacuation de fluide destiné à être parcouru par au moins une onde de choc formée en amont caractérisé en ce qu'il comporte à l'intérieur de ce canal un amortisseur d'onde de choc présentant au moins un disque rigide transversal à ce canal, de section maximale inférieure à la section locale de ce canal.

Selon des disposition préférées de l'invention éventuellement combinées :
- cet amortisseur est coaxial à ce canal ;
- cet amortisseur est solidaire par une tige axiale d'un capot éjectable coiffant une extrémité terminale de ce canal ;
- cet amortisseur est disposé dans une portion rétrécie formant col de ce canal ;
- la section de ce disque transversal rigide vaut entre 30 % et 99 % (de préférence entre 66 % et 90 %) de la section locale du canal ;
- ce disque rigide comporte une face amont contre laquelle est disposée une rondelle en élastomère ;
- chaque disque est raccordé à la tige, vers l'aval, par une portion tronconique ;
- cet amortisseur comporte au moins deux disques transversaux rigides décalés axialement, dont un disque amont et un disque aval de plus grand diamètre que ce disque amont ;
- le disque amont a une section entre 2 et 10 fois (de préférence entre 4 et 5 fois) plus petite que le disque aval ;
- les disques amont et aval sont espacés d'une distance valant entre 10 % et 200 % du diamètre du disque aval ;
- le disque amont est plan et continu, fixé à une extrémité amont d'une tige de liaison entre ces disques ;
- l'amortisseur comporte une tige formée d'un tronçon amont disposé entre le disque amont et le disque aval et un tronçon aval de plus grand diamètre que le tronçon amont, destiné à la fixation de l'amortisseur en aval du disque aval ;
- l'amortisseur comporte deux disques seulement ;
- ce canal est obturé en amont par un opercule frangible.

L'invention propose également, un véhicule tel que vecteur aéronautique ou marin, comportant un système de propulsion comprenant une chambre de combustion raccordée à un système à débit de fluide du type précité.

Des objets, caractéristiques et avantages de l'invention ressortent de la description qui suit, donnée à titre d'exemple non limitatif, en regard des dessins annexés sur lesquels :
- la figure 1 est une vue partielle avec arrachement partiel en coupe axiale de la partie arrière d'un véhicule conforme à l'invention ;
- la figure 2 en est une vue arrière selon la flèche II de la figure 1, après enlèvement du capot de fermeture ;
- la figure 3 est une vue agrandie du bloc tuyère de la figure 1, selon la ligne de coupe III-III de la figure 2,
- la figure 4 est une vue de côté de l'amortisseur des figures 1 et 3 ;
- la figure 5 en est une vue éclatée avec arrachements partiels en coupe axiale ;
- la figure 6 est une vue en coupe de l'amortisseur selon la ligne de coupe VI-VI de la figure 5 ; et
- les figures 7A à 7C sont des vues simplifiées représentant trois étapes dans le franchissement par une onde de choc de l'amortisseur des figures 4 à 6 dans la configuration des figures 1 et 3.

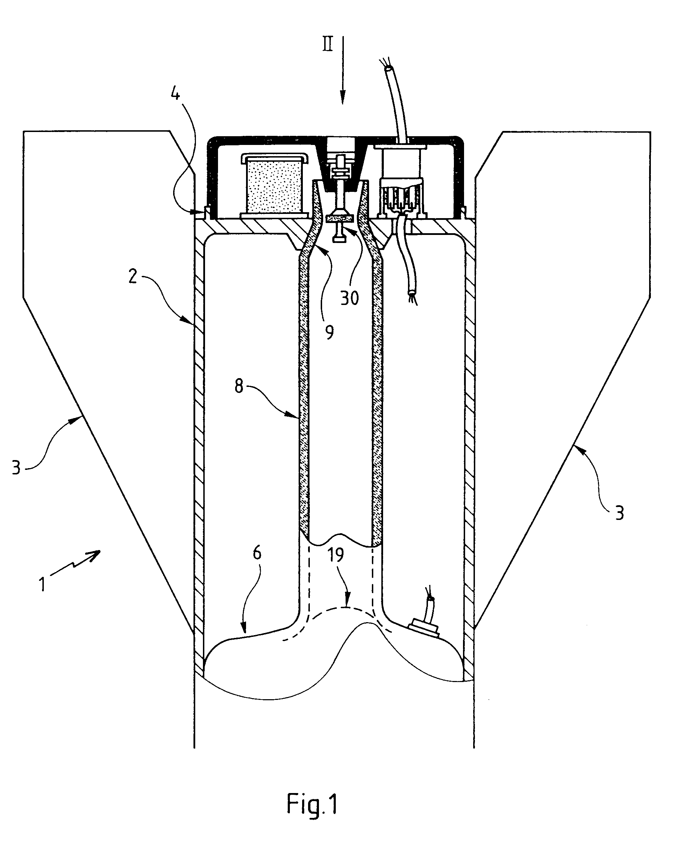

Les figures 1 à 3 représentent la partie arrière 1 d'un véhicule ici de type missile aéronautique.

Ce véhicule sous-marin comporte à sa partie arrière une portion de corps tronconique 2, le long de laquelle sont disposés des empennages stabilisateurs fixes 3. La portion de corps 2 se termine par une tranche arrière 4.

Dans cette portion de corps cylindrique 2 est disposé un système de propulsion qui s'étend jusque dans la tranche arrière 4 précitée.

Le système de propulsion comporte principalement une chambre de combustion 6 représentée en partie à la figure 1, munie de ses équipements propres classiques. Cette chambre de combustion est, à sa partie arrière, raccordée à un tube 8 dans le prolongement duquel est disposée une tuyère 9.

Ce tube et cette tuyère constituent conjointement un canal d'évacuation de gaz destiné, lors de la mise brutale sous pression, à être parcouru par une onde de choc.

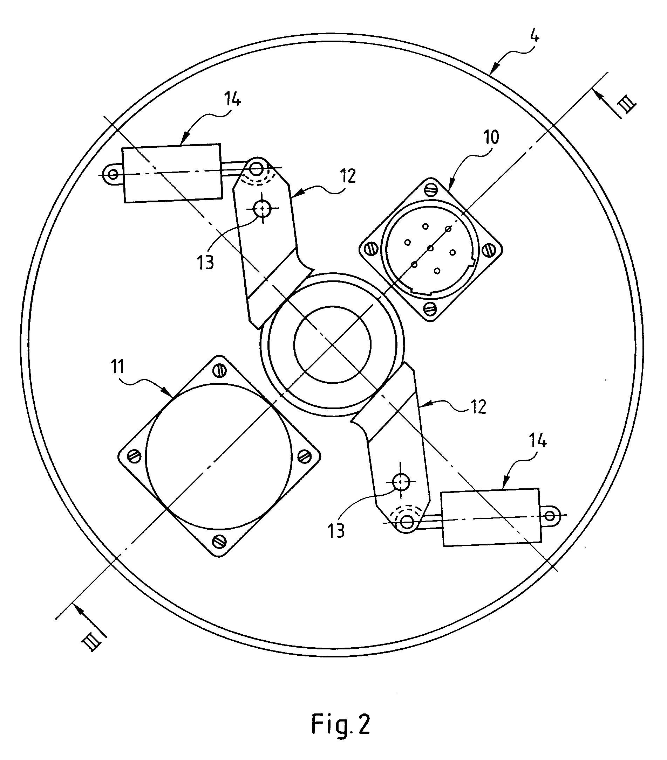

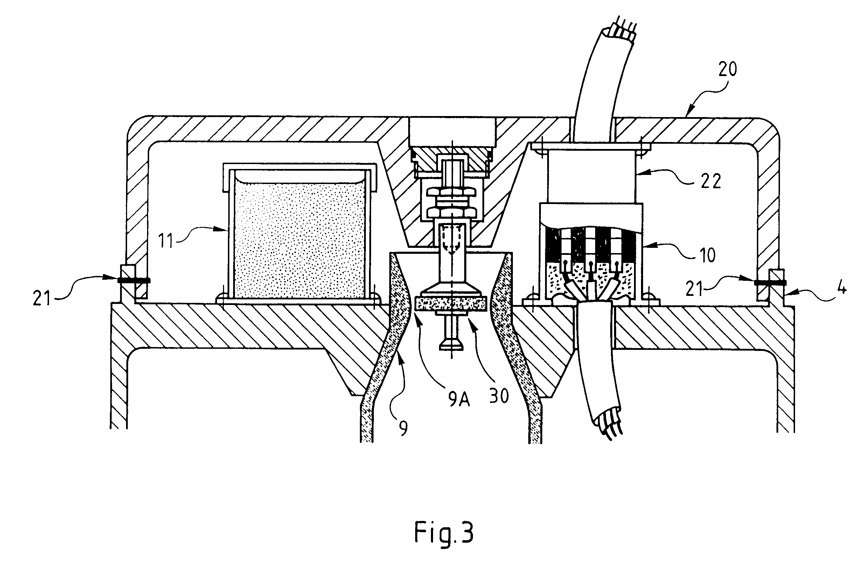

Ainsi que cela ressort plus particulièrement des figures 2 et 3, autour de la tuyère 9, sont disposés divers équipements classiques destinés à la liaison avec le poste de tir, à la détection et au guidage du véhicule, et qui peuvent recevoir l'onde de choc réfractée lors du démarrage du débit de la tuyère.

En particulier sont représentés une prise fixe de transmission des ordres électriques 10, un traceur pyrotechnique 11, des gouvernes (ou spoïlers) de jet pivotantes 12 montées sur des pivots 13 et leurs actionneurs 14.

La chambre de combustion 6 est initialement isolée du tube 8 par un opercule d'étanchéité 19 et, dans l'attente de la mise à feu du propulseur, un capot éjectable 20 coiffe la tranche arrière 4 de la portion de corps 2. Il est fixé par des liaisons frangibles 21 de tout type connu approprié et porte une prise éjectable 22 de liaison électrique avec le poste de tir.

Selon l'invention une pièce 30 formant amortisseur d'onde de choc est disposée dans ce canal ici assujettie au capot ; de préférence dans la tuyère, ici plus précisément dans l'étranglement ou col 9A que celle-ci présente.

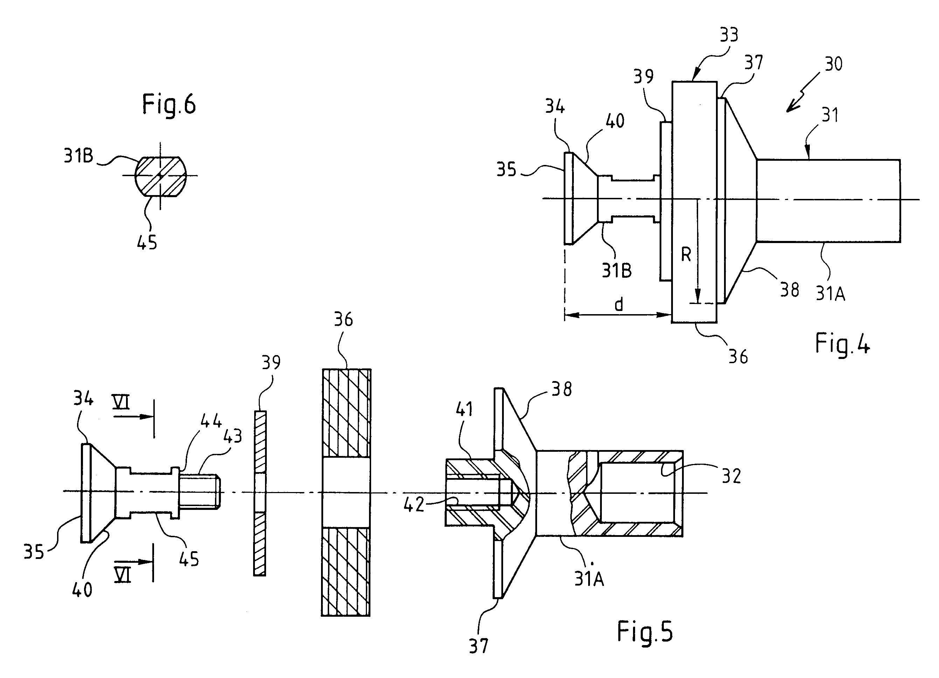

Le détail de cet amortisseur est donné aux figures 4 à 6.

Cet amortisseur comporte une tige 31 (ici en deux tronçons - voir plus loin) orientée axialement, ici disposée dans l'axe de la tuyère. C'est par cette tige que l'amortisseur est lié au capot 20, à la faveur d'un trou borgne 32 prévu en une extrémité libre de cette tige.

Le long de cette tige centrale sont assujettis deux disques transversaux 33 et 34 décalés axialement.

De manière avantageuse, ces disques ont, transversalement à l'axe, des aires différentes, celui des disques le plus en amont, repéré 34, étant plus petit que le disque le plus en aval repéré 33.

Selon une disposition préférée de l'invention, le disque amont 34 est une pastille fixée au bout amont de la tige, et présente une surface transversale plane 35.

Le disque amont est de préférence décalé vis à vis du disque aval d'une distance d approximativement égale au rayon R de ce disque aval.

L'aire de ce disque aval est de préférence au moins approximativement égale au double de l'aire du disque amont.

La portion 33 de plus grand diamètre se situe dans la partie la plus étroite de l'étranglement 9A de la tuyère et en obture ici une fraction d'environ 80 % de sa section de passage (le rapport des diamètres est d'environ 0,9).

De préférence, ce disque est, au moins à sa périphérie, en un matériau de dureté moyenne (en pratique d'une dureté SHORE comprise entre 60 et 70), par exemple en élastomère, de manière à éviter tout risque de détérioration de l'étranglement 9A lors de l'éjection de l'amortisseur.

Pour assurer une bonne rigidité à ce disque 33, celui-ci comporte une rondelle 36 en élastomère en appui contre un flasque métallique 37 dont le diamètre (qui définit le diamètre du disque 33) est ici à peine inférieur à celui de la rondelle (ici environ 85 %). La rigidité de ce flasque d'appui est renforcée du fait que celui-ci se raccorde au tronçon de tige aval 31A par une portion tronconique 38. Du fait de la souplesse de l'élastomère, on peut prévoir pour cette rondelle un diamètre à peine inférieur à celui du col.

De préférence un disque métallique 39 longe la rondelle sur sa face amont sur une fraction d'environ 2/3 de son diamètre.

Le disque amont 34 est quant à lui entièrement métallique, lui aussi raccordé au tronçon de tige amont 31B par une portion tronconique 40.

Ainsi que cela ressort en particulier de la figure 5, l'amortisseur 30 est en quatre parties :
- la rondelle 36 en élastomère,
- le disque métallique 39 de forme annulaire,
- une pièce arrière comportant le tronçon de tige aval, la portion tronconique 38, le flasque 37 et une douille de centrage 41, présentant un trou borgne alésé 42, destiné à traverser la rondelle 36, et
- une pièce avant comportant le disque amont 33, la portion tronconique 40 et le tronçon de tige amont 31B terminé par un doigt fileté 43 adapté à traverser le disque métallique 39 et coopérer avec la douille 41 en sorte d'assurer par vissage un serrage de la rondelle entre le flasque 37 et le disque annulaire 39 (la pièce avant appuie sur ce dernier par un épaulement 44 bordant ledit doigt 43).

Ces pièces métalliques sont en un alliage léger tel que AU4G.

Le tronçon de tige aval 31A est de préférence de plus grand diamètre que le tronçon de tige amont 31B. Ce dernier comporte ici (voir figure 6) des méplats 45 adaptés à permettre un vissage aisé des deux pièces sans détérioration de celles-ci.

En fonctionnement, lors de la mise à feu du dispositif de propulsion de la figure 1, la pression monte dans la chambre de combustion 6 à très grande vitesse, l'opercule d'étanchéité 19 cède ("claque"), et la mise en débit correspondante du tube 8 s'accompagne de l'apparition d'une onde de choc instationnaire qui circule dans le tube 8 vers la tuyère 9.

En fait, l'existence du col 9A, précédé par une portion lentement convergente, n'est a priori pas favorable à une atténuation de l'intensité de l'onde de choc : elle subit en effet un renforcement qui peut, en fonction de l'angle de convergence, être accompagné par la formation d'ondes de chocs réfléchies.

La localisation de l'amortisseur 30 dans le col 9A a pour effet d'atténuer l'intensité de l'onde de choc qui le franchit, et la présence de plusieurs disques a pour avantage d'effectuer cette atténuation en plusieurs temps.

En fait, l'amortisseur ne doit pas obturer complètement la section de passage de l'endroit du canal 8 + 9 où il se trouve, car le fonctionnement nominal du largage du capot 20 prévoît ici une montée en pression de la zone en aval du col.

L'énergie perdue par l'onde lors du franchissement de l'amortisseur est en partie récupérée par ce dernier, ce qui aide à l'éjection du capot. Il est toutefois à noter qu'il a fallu, pour bien tirer parti de cette énergie, procéder à une définition rigoureuse de la géométrie de l'amortisseur (voir ci-dessus).

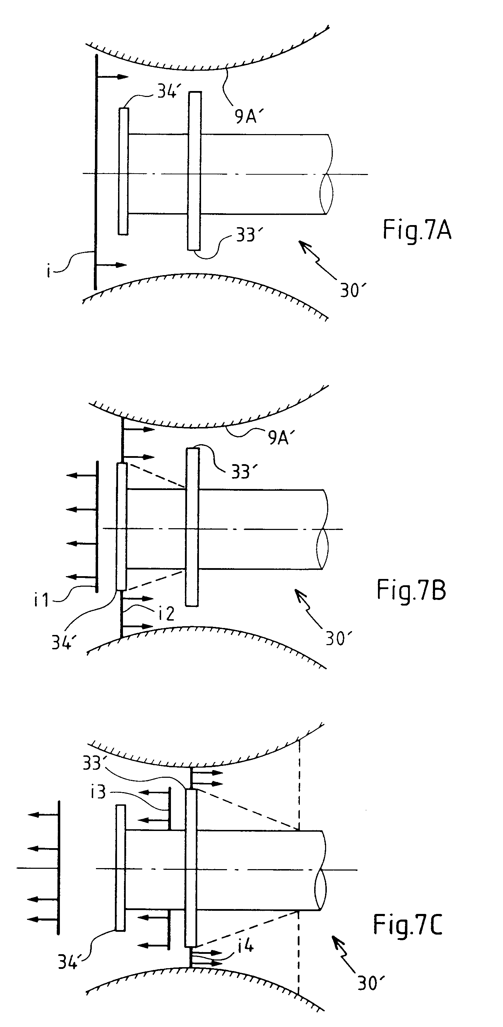

Le schéma de principe des figures 7A à 7C fait apparaître le fractionnement que subit l'onde de choc i du fait de l'amortisseur 30′ (il s'agit ici d'une version simplifiée schématique de l'amortisseur de la figure 4, ce qui explique l'usage de l'indice "prime").

En un premier temps, une partie centrale i1 de l'onde est réfléchie par le disque amont 34′ (voir figure 7B). Cette réflexion est optimale du fait de la planéité de la surface 35′.

La partie annulaire i2 qui a franchi le disque amont après une légère détente (figure 7B) est à son tour fractionnée par le disque aval 34, en une partie périphérique i4 qui se propage vers l'aval en s'élargissant, et une partie annulaire centrale i3 qui est renvoyée vers l'amont (avec éventuel fractionnement au franchissement en retour du disque amont 34′ sauf si, comme prévu dans le cas de l'amortisseur 30, ce disque est du côté aval suivi par une zone tronconique), en retard sur la partie centrale renvoyée par le disque amont.

L'évacuation immédiate de cet amortisseur aussitôt après la mise à feu est assurée du fait de l'éjection du capot auquel il est fixé.

On appréciera que l'amortisseur 30 agit, par ses disques, sur l'onde de choc à la manière de chicanes.

Il va de soi que la description qui précède n'a été proposée qu'à titre d'exemple non limitatif et que de nombreuses variantes peuvent être proposées par l'homme de l'art sans sortir du cadre de l'invention.

Ainsi, l'invention couvre notamment le cas d'un amortisseur à disque unique ou le cas d'un amortisseur à plusieurs disques de plus en plus larges (de préférence la section de chaque disque est alors le quadruple de celle du disque immédiatement en amont).

D'autre part, on peut prévoir l'amortisseur en amont ou en aval du col, bien que la configuration de la figure 1 ou 3 soit préférée.

Dans l'exemple de la figure 4, la rondelle 37 a un diamètre de 30 mm.

## Revendications

1. Système à débit de fluide compressible à mise sous pression brutale comportant un canal d'évacuation de fluide (8 + 9) destiné à être parcouru par au moins une onde de choc formée en amont caractérisé en ce qu'il comporte à l'intérieur de ce canal un amortisseur d'onde de choc (30, 30′) présentant au moins un disque rigide transversal (33, 34) à ce canal, de section maximale inférieure à la section locale (9A) de ce canal.

2. Système selon la revendication 1, caractérisé en ce que cet amortisseur (30) est coaxial à ce canal.

3. Système selon la revendication 1 ou 2, caractérisé en ce que cet amortisseur (30) est solidaire par une tige axiale d'un capot éjectable (20) coiffant une extrémité terminale (4) de ce canal.

4. Système selon l'une quelconque des revendications 1 à 3, caractérisé en ce que cet amortisseur est disposé dans une portion rétrécie (9A) formant col de ce canal.

5. Système selon l'une quelconque des revendications 1 à 4, caractérisé en ce que la section de ce disque transversal rigide (33) vaut entre 30 % et 99 % de la section locale du canal.

6. Système selon la revendication 5, caractérisé en ce que la section de ce disque transversal rigide vaut entre 66 % et 99 %.

7. Système selon l'une quelconque des revendications 1 à 6, caractérisé en ce que ce disque rigide comporte une face amont contre laquelle est disposée une rondelle en élastomère.

8. Système selon l'une quelconque des revendications 1 à 7, caractérisé en ce que chaque disque (33, 34) est raccordé à la tige, vers l'aval, par une portion tronconique (38, 40).

9. Système selon l'une quelconque des revendications 1 à 8, caractérisé en ce que cet amortisseur comporte au moins deux disques transversaux rigides (33, 34) décalés axialement, dont un disque amont (34) et un disque aval (33) de plus grand diamètre que ce disque amont.

10. Système selon la revendication 9, caractérisé en ce que le disque amont a une section entre 2 et 10 fois plus petite que le disque aval.

11. Système selon la revendication 9 ou 10, caractérisé en ce que les disques amont et aval sont espacés d'une distance valant entre 10 % et 200 % du diamètre du disque aval.

12. Système selon l'une quelconque des revendications 9 à 11, caractérisé en ce que le disque amont est plan et continu, fixé à une extrémité amont d'une tige de liaison entre ces disques.

13. Système selon l'une quelconque des revendications 9 à 12, caractérisé en ce que l'amortisseur comporte une tige formée d'un tronçon amont (31B) disposé entre le disque amont (34) et le disque aval (33) et un tronçon aval (31A) de plus grand diamètre que le tronçon amont, destiné à la fixation de l'amortisseur en aval du disque aval.

14. Système selon l'une quelconque des revendications 8 à 11, caractérisé en ce que l'amortisseur comporte deux disques seulement.

15. Système selon l'une quelconque des revendications 1 à 14, caractérisé en ce que ce canal est obturé en amont par un opercule frangible.

16. Véhicule aérien ou marin comportant un système de propulsion comprenant une chambre de combustion (6) munie d'un orifice de sortie (7) raccordé à un système à débit de fluide selon l'une quelconque des revendications 1 à 15.

17. Véhicule selon la revendication 16, caractérisé en ce que le canal d'évacuation de fluide comporte un tube (8) raccordé à une tuyère munie d'un col (9A).

18. Véhicule selon la revendication 17, caractérisé en ce que l'amortisseur est disposé dans le col de cette tuyère.

## Claims

1. System with a flow of compressible fluid for abrupt pressurization, having a fluid-discharge channel (8 + 9) designed to have at least one shock wave formed upstream pass through it, characterised in that it has on the inside of this channel a shock-wave damper (30, 30') having at least one rigid disc (33, 34) transverse to this channel, with a maximum cross section smaller than the local cross section (9A) of this channel.

2. System according to Claim 1, characterised in that this damper (30) is coaxial with this channel.

3. System according to Claim 1 or 2, characterised in that this damper (30) is attached, by an axial rod, to an ejectable cover (20) capping a terminal end (4) of this channel.

4. System according to any one of Claims 1 to 3, characterised in that this damper is disposed in a narrowed portion (9A) forming a neck in this channel.

5. System according to any one of Claims 1 to 4, characterised in that the cross section of this rigid transverse disc (33) is between 30% and 99% of the local cross section of the channel.

6. System according to Claim 5, characterised in that the cross section of this rigid transverse disc is between 66% and 99%.

7. System according to any one of Claims 1 to 6, characterised in that this rigid disc has an upstream face against which an elastomer washer is disposed.

8. System according to any one of Claims 1 to 7, characterised in that each disc (33, 34) is connected to the rod, towards the downstream end, by a tapered portion (38, 40).

9. System according to any one of Claims 1 to 8, characterised in that this damper has at least two axially offset rigid transverse discs (33, 34), namely one upstream disc (34) and one downstream disc (33) with a larger diameter than this upstream disc.

10. System according to Claim 9, characterised in that the upstream disc has a cross section that is between 2 and 10 times smaller than the downstream disc.

11. System according to Claim 9 or 10, characterised in that the upstream and downstream discs are spaced apart by a distance equal to between 10% and 200% of the diameter of the downstream disc.

12. System according to any one of Claims 9 to 11, characterised in that the upstream disc is plane and continuous, fixed to an upstream end of a connecting rod between these discs.

13. System according to any one of Claims 9 to 12, characterised in that the damper has a rod formed from an upstream length (31B) disposed between the upstream disc (34) and the downstream disc (33) and a downstream length (31A) with a larger diameter than the upstream length, intended for fixing the damper downstream of the downstream disc.

14. System according to any one of Claims 8 to 11, characterised in that the damper has only two discs.

15. System according to any one of Claims 1 to 14, characterised in that this channel is closed off upstream by a frangible cap.

16. Air or sea vehicle having a propulsion system comprising a combustion chamber (6) provided with an outlet orifice (7) connected to a fluid flow system according to any one of Claims 1 to 15.

17. Vehicle according to Claim 16, characterised in that the fluid discharge channel has a tube (8) connected to a nozzle provided with a neck (9A).

18. Vehicle according to Claim 17, characterised in that the damper is disposed in the neck of this nozzle.

## Patentansprüche

1. System mit Durchsatz eines komprimierbaren Fluids, das unter hohen Druck gesetzt wird, umfassend einen Fluidaustrittskanal (8 + 9), der dazu bestimmt ist, von mindestens einer eingangsseitig gebildeten Stoßwelle durchlaufen zu werden, dadurch gekennzeichnet, daß es im Inneren dieses Kanals einen Stoßwellendampfer (30, 30') besitzt, der mindestens eine quer zu diesem Kanal angeordnete, starre Scheibe (33, 34) aufweist, deren maximaler Querschnitt kleiner als der örtliche Querschnitt (9A) dieses Kanals ist.

2. System nach Anspruch 1, dadurch gekennzeichnet, daß dieser Dampfer (30) zu diesem Kanal koaxial ist.

3. System nach Anspruch 1 oder 2, dadurch gekennzeichnet, daß dieser Dämpfer (30) durch eine axiale Stange mit einer ausstoßbaren Kappe (20) fest verbunden ist, die ein terminales Ende (4) dieses Kanals abdeckt.

4. System nach einem der Ansprüche 1 bis 3, dadurch gekennzeichnet, daß dieser Dampfer in einem verjüngten, einen Hals bildenden Abschnitt (9A) dieses Kanals angeordnet ist.

5. System nach einem der Ansprüche 1 bis 4, dadurch gekennzeichnet, daß der Querschnitt dieser starren Querscheibe (33) 30 % bis 99 % des örtlichen Querschnitts des Kanals beträgt.

6. System nach Anspruch 5, dadurch gekennzeichnet, daß der Querschnitt dieser starren Querscheibe 66 % bis 99 % beträgt.

7. System nach einem der Ansprüche 1 bis 6, dadurch gekennzeichnet, daß diese starre Scheibe eine eingangsseitige Seite besitzt, an welcher eine Scheibe aus Elastomer anliegt.

8. System nach einem der Ansprüche 1 bis 7, dadurch gekennzeichnet, daß jede Scheibe (33, 34) auf die Ausgangsseite zu durch einen kegelstumpfförmigen Abschnitt (38, 40) mit der Stange verbunden ist.

9. System nach einem der Ansprüche 1 bis 8, dadurch gekennzeichnet, daß dieser Dämpfer mindestens zwei axial versetzte starre Querscheiben (33, 34) besitzt, und zwar eine eingangsseitige Scheibe (34) und eine ausgangsseitige Scheibe (33), die einen größeren Durchmesser als diese eingangsseitige Scheibe hat.

10. System nach einem der Ansprüche 1 bis 9, dadurch gekennzeichnet, daß die eingangsseitige Scheibe einen Querschnitt hat, der 2 bis 10 mal kleiner als die ausgangsseitige Scheibe ist.

11. System nach Anspruch 9 oder 10, dadurch gekennzeichnet, daß der Abstand zwischen der eingangsseitigen und der ausgangsseitigen Scheibe 10 % bis 200 % des Durchmessers der ausgangsseitigen Scheibe beträgt.

12. System nach einem der Ansprüche 9 bis 11, dadurch gekennzeichnet, daß die eingangsseitige Scheibe eben und durchgängig ist und an einem eingangsseitigen Ende einer Verbindungsstange zwischen diesen Scheiben befestigt ist.

13. System nach einem der Ansprüche 9 bis 12, dadurch gekennzeichnet, daß der Dämpfer eine Stange aufweist, die aus einem eingangsseitigen Abschnitt (31B), der zwischen der eingangseitigen Scheibe (34) und der ausgangsseitigen Scheibe (33) angeordnet ist, und aus einem ausgangsseitigen Abschnitt (31A) gebildet ist, der einen größeren Durchmesser als der eingangsseitige Abschnitt hat und zur bezüglich der ausgangsseitigen Scheibe ausgangsseitigen Befestigung des Dämpfers bestimmt ist.

14. System nach einem der Ansprüche 8 bis 11, dadurch gekennzeichnet, daß der Dämpfer nur zwei Scheiben aufweist.

15. System nach einem der Ansprüche 1 bis 14, dadurch gekennzeichnet, daß der Kanal eingangsseitig durch einen abbrechbaren Deckel verschlossen ist.

16. Luft- oder Seefahrzeug mit einem Antriebsystem, das eine Verbrennungskammer (6) umfaßt, die mit einer Austrittsöffnung (7) versehen ist, die an ein System mit Fluiddurchsatz nach einem der Ansprüche 1 bis 15 angeschlossen ist.

17. Fahrzeug nach Anspruch 16, dadurch gekennzeichnet, daß der Fluidaustrittskanal ein Rohr (8) aufweist, das mit einer mit einem Hals (9A) versehenen Düse verbunden ist.

18. Fahrzeug nach Anspruch 17, dadurch gekennzeichnet, daß der Dämpfer im Hals dieser Düse angeordnet ist.
